# EUROPEAN PATENT SPECIFICATION

(11) **EP 1 887 821 B1**
(45) Date of publication and mention of the grant of the patent: **26.12.2012**
(21) Application number: 06118546.8
(22) Date of filing: 07.08.2006
(51) Int. Cl.: H04W 48/20

(54) **Apparatus, and associated method, for performing cell selection in a packet radio communication system**
Vorrichtung und zugehöriges Verfahren zur Zellenauswahl in einem Paketfunkkommunikationssystem
Appareil et procédé associé pour la sélection de cellules dans un réseau de communication radio par paquets

(43) Date of publication of application: 13.02.2008
(73) Proprietor: Research In Motion Limited, Waterloo, ON N2L 3W8 (CA)
(72) Inventor: Pecen, Mark, Ontario N2L 5P3 (CA)
(74) Representative: Hibbert, Juliet Jane Grace

(56) References cited:
- EP-A- 1 653 682
- WO-A-02/35879
- US-A1- 2005 070 294
- US-A1- 2005 176 440

## Description

The present invention relates generally to cell selection in a radio communication system. More particularly, the present invention relates to apparatus, and an associated method, by which to select a cell, that is, its corresponding fixed-site communication station, with which to communicate pursuant to performance of a data communication service. Autonomous mobile station cell selection is provided in a manner that facilitates distribution of loading in the radio communication system. Available cells are ascertained, and random allocation of a cell is made from amongst the available cells.

### Background of the Invention

The use of mobile radio communication systems through which to communicate is commonplace in much of modem society. Various different types of radio communication systems are available for use pursuant to performance of the various different types of communication services. For instance, cellular communication systems are used through which to provide circuit-switched communication services and also, increasingly, packet-switched communication services. The network infrastructures of cellular communication systems have been deployed, and are available for use, over significant portions of the populated areas of the world. Signals generated during operation of a cellular communication system permit the radio frequency bandwidth allocated to such a system, in general, to be efficiently utilized. Relatively low-power signals are generated during its operation, and the channels upon which such low-power signals are generated are re-usable within relatively short distances pursuant to a cell reuse scheme. A mobile station, used by a user through which to communicate by way of a cellular communication system, communicates with a base station, or other fixed-site station, of the network infrastructure. The particular base station with which the mobile station communicates is generally dependent upon the location of the mobile station. That is to say, the mobile station communicates with a base station in whose proximity that the mobile station is positioned.

A GSM (Global System for Mobile communications) is an exemplary cellular communication system. A GSM system operates in conformity with the operating protocols and requirements of a GSM operating specification. Mobile stations operable in a GSM system, for instance, operate in conformity with the operating protocols set forth in the specification. GSM technologies were originally based upon circuit-switched technologies and provided circuit-switched connections between communication endpoints. However, GPRS (General Packet Radio Service) and, more recently, EDGE (Enhanced Data for GSM Evolution) capabilities have been added to GSM systems. Such capabilities provide high-speed, variable-rate data communication services and make use of packet-switched technologies. EDGE is, in essence, a superset of GPRS and provides the capability of packet-based user data interchange by way of the network infrastructure of a GSM network and a GSM-defined, radio air interface. EDGE and GPRS data communications exhibit characteristics that differ with those of voice communications. For example, data communications are generally bursty. That is to say, data is typically communicated in bursts. In a system that defines communication channels, in part, by time slots, multiple, contiguous time slot allocations are sometimes needed to communicate the data in a single burst.

Optimization of cell selection differs, as a result, when a data communication service is to be performed than when a circuit-switched, voice communication service is to be performed. In existing GSM operation, cell selection is generally predicated upon RSSI (Receive Signal Strength Indication) levels of signals communicated by base transceiver stations that define the individual cells. Cell selection predicated upon measured RSSI levels works well when voice information is communicated in a GSM system. Agile handover mechanisms are presently available, e.g., such as that defined in 3GPP document TS 45.008. Such mechanisms provide for cell selection to permit rapid selection, and reselection of cells in the event of signal quality degradation or bit error probability increase. Such existing mechanisms are well able best to optimize circuit-switched communications, but their use in cell selection pursuant to performance of a data communication service is generally sub-optimal. Due to the regular need to allocate multiple, contiguous time slots for a data service, and for other reasons, a data communication is usually started and completed at a single cell. That is to say, even if a handoff of communications is warranted, a target cell might well not have multiple, contiguous time slots available to allocate.

When an area is encompassed by the coverage areas of a plurality of fixed-site communication stations, data communications are performable with any of the plurality of fixed-site stations. However, when RSSI levels are the sole mechanism by which cell selection is based, multiple users are likely all to select communications with the cell whose signal is of greatest RSSI level. Unequal distribution of loading results as one cell is heavily loaded while other cells are idle or lightly loaded.

Prior art methods of cell selection mandate or direct cell selection without regard to the loading imposed on the cell to which a mobile station transfers to. EP 1 653 682 (NTT DoCoMo) discloses a method and apparatus for scheduling a handoff. U.S. Application Publication 2005/0070294 (IBM) discloses a method and apparatus for effectuating a handoff using various communications conditions parameters. WO 02/35879 (Ericsson) discloses a method and apparatus for requesting a handoff from one mobile switching center (MSC) to another. US 2005/0176440 (NEC) is directed to a distributed approach to handoff and cell site selection that takes into account the load dynamics in a multi-cell system. US 6,131,038 (Obi) discloses a method of and apparatus for selecting a channel in a base station of a private radio telecommunications system by determining the field intensity of radio waves received. A radio wave is received and compared in field intensity with a threshold value. The threshold value is considered to be received while unused, in view of the receiver characteristics of the base station, and the base station selects a channel with the field intensity below the threshold value as an idle channel to form an idle channel list. To communicate with a mobile terminal, a channel is selected at random among the channels listed in the idle channel list. The methods disclosed in each of these prior art references are performed by or within a *network* or a network element.

If an improved cell selection manner could be provided that better optimizes cell selection for data communications, improved system operation would be possible.

It is in light of this background information related to data-capable radio communication systems that the significant improvements of the present invention has evolved.

In accordance with the subject invention, there is provided an apparatus and a method for a mobile station to select a communication station of a multi-station radio communication network through which to communicate, the apparatus and method being as set out in the independent claims. Preferred supplementary features are as set out in the dependent claims.

### Brief Description of the Drawings

Figure 1 illustrates a functional block diagram of a radio communication system of which an embodiment of the present invention is operable.

Figure 2 illustrates a message sequence diagram representative of signaling generated during operation of the communication system shown in Figure 1.

Figure 3 illustrates a method flow diagram representative of the method of operation of an embodiment of the present invention.

### Detailed Description

The present invention, accordingly, advantageously provides apparatus, and an associated method, by which to perform cell selection in a radio communication system.

Through operation of an embodiment of the present invention, a manner is provided by which to select a cell, or its corresponding fixed-site communication station, with which to communicate pursuant to performance of a data communication service.

In one aspect of the present invention, autonomous mobile station cell selection is provided that facilitates distribution of loading in a radio network. By increasing the likelihood of equal loading distribution across a network, improved communication performance is possible.

In another aspect of the present invention, determination is made at a mobile station of cells with which the mobile station is able to communicate. Such determination is made, e.g., by monitoring signals broadcast by the base stations defming the individual ones of the cells. Monitoring is performed, e.g., at selected intervals or as part of registration procedures to determine the available cells, available to be used through which to communicate.

In another aspect of the present invention, cell availability is determined by RSSI (Receive Signal Strength Indication) measurements in which base station broadcasts of base stations associated with, and defining, different ones of the cells are made. If the RSSI levels are at least as good as a selected, minimum threshold level, the associated cell is considered to be an available cell, available to the mobile station through which to communicate. Other measurements of broadcast signal indicia, such as bit error measurement of the broadcast signals, alternately are usable in the determination of available cells.

In another aspect of the present invention, each base station associated with an available cell forms a member of an available station set. An available station set selector determines, responsive to the RSSI, or other, measurements, which of the fixed-site communication stations are eligible to be members of the available station set. As each fixed-station of the available station set exhibits characteristics that are at least as good as a minimum threshold level, communications are possible with any of the fixed-site stations. And, any of the stations of the available station sets are eligible, therefore, for use through which to communicate data pursuant to performance of a data communication service.

In another aspect of the present invention, an allocator is provided with indications of the members of the available station set. The allocator allocates a selected one of the stations of the available station set as a selected station through which communications are elected to be performed pursuant to a data communication session. The selected station, by its inclusion in the available station set exhibits characteristics permitting of its use through which to communicate. And, its subsequent selection by the allocator as the selected station through which to perform a data communication service need not require further measurement to ensure acceptability. The allocation of the selected one of the stations of the available station set is random. That is to say, from amongst the stations of the available station set, the allocation of the selected station is made on a random basis, thereby to distribute, by random selection, network loading when multiple numbers of mobile stations communicate with the network within the same general area.

In one random selection procedure, frame numbers that are associated with frames of data that are communicated during operation are used. In another manner of random selection procedure, a system time value is used. And, in another manner of operation, geographical indicia, such as longitudinal or latitudinal information, of the position of a mobile station are used. Any of such values are divided, e.g., by the number of fixed-site stations of the available station set and the integer remainder of the resultant value is associated with a listing of the stations of the available station set and used to select the selected one of the stations of the set. That is to say, a modulo operation is performed. The allocated station of the available station set is identified, and a request is made of the network to utilize the selected station pursuant to the communication of the data to perform the data communication service. The request is made, for instance, as part of a request message. And, the request message includes the identity of the selected one of the available stations of the available station set.

Thereby, through the random allocation of a cell of the available cells through which communication is possible, the loading is more likely to be evenly distributed than by using conventional cell selection mechanisms.

In these and other aspects, therefore, apparatus, and an associated method, is provided for selecting a selected communication station of a multi-station radio communication network through which to communicate. An available station set selector is configured to select an available station set of communication stations of the multi-station radio network that exhibit characteristics at least as good as a threshold. An allocator is adapted to receive indications of selections made by the available station set selector. The allocator is configured to allocate the selected communication station through which to communicate. Allocation is made by the allocator of the selected communication station in manners to distribute radio network loading amongst communication stations of the selected station set.

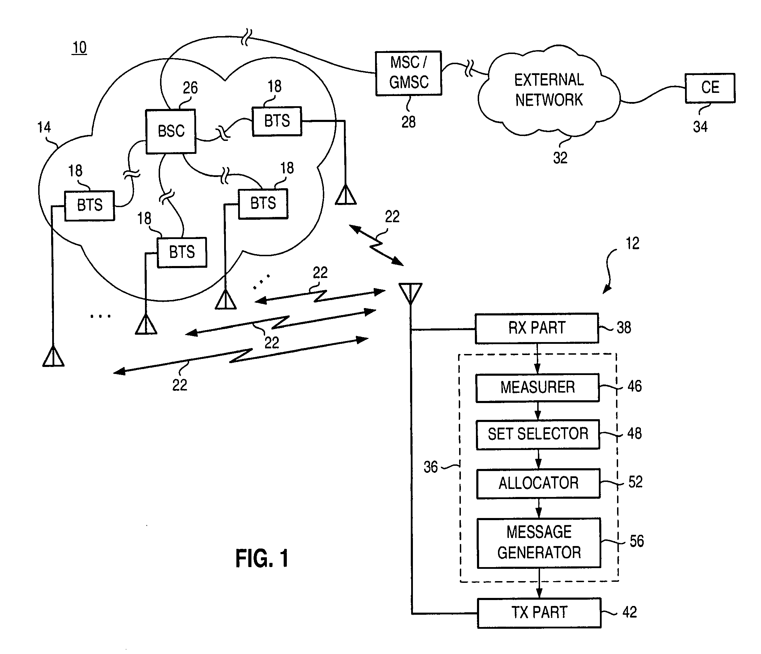

Referring first, therefore, to Figure 1, a radio communication system, shown generally at 10, provides for radio communications with mobile stations, of which the mobile station 12 is exemplary. In the exemplary implementation, the communication system includes parts that operate in general conformity with the operating protocols and procedures defined in the various GSM/GPRS/EDGE (Global System for Mobile communications/General Packet Radio Service/ Enhanced Data for GSM Evolution) operating specifications. The following description shall describe exemplary operation of the communication system with respect to its exemplary implementation as a GSM/GPRS/EDGE system. However, the communication system, more generally, is representative of any of various types of radio communication systems that provide for performance of data communication services. The functional entities shown in Figure 1, and described below, are representative, with appropriate alteration, of corresponding entities and other types of data radio communication systems.

The mobile station is permitting of movement. At successive times, the mobile station is positionable at successive locations throughout an area encompassed by the communication system. Movement of the mobile station is possible, both during its use pursuant to a communication service as well as movement during periods between intervals during which the mobile station is used to communicate data during performance of a data communication service.

The network infrastructure of the radio communication system includes a radio access network 14 that includes a plurality of base transceiver stations (BTSs) 18, or other fixed-site communication station. When, e.g., implemented as a wireless local area network, the devices 18 form access points. The fixed-site transceiver transceive communication signals by way of a radio air interface, here represented by the arrows 22 with the mobile station 12 when the devices 12 and 18 are in communication range of one another.

The radio access network is here further shown to include a base station controller (BSC) 26 that operates, amongst other things, to control operation of the base transceiver stations 18. A mobile switching center/gateway mobile switching center (MSC/GMSC) 28 is positioned between the network 14 and an external network 32. A communication endpoint (CE) 34 is representative of a communication device that forms an alternate endpoint of a communication path extending to, and from, the mobile station 12.

When the mobile station moves, or is otherwise repositioned, the fixed-site transceiver with which the mobile station communicates might need to be different than the fixed-site transceiver with which the mobile station earlier communicated. And, the coverage areas defined by different ones of the fixed-site transceivers also potentially overlap. That is to say, at a particular location, with such overlapping coverage areas, the mobile station is potentially capable of communicating with any of the corresponding plurality of fixed-site transceivers. Conventional cell selection mechanisms, such as that set forth in the aforementioned 3GPP document TS 44.060, that cause a mobile station to select a fixed-site station that exhibits a strongest RSSI level might result in unbalanced loading conditions when data communication services are performed. In contrast to circuit-switched voice communications, data communications are regularly performed without handoff due to the typical, multiple time slot communication allocation need of many data communication services. When multiple numbers of mobile stations, each performing data communication services, are located within a common area at which a single base station exhibits strongest RSSI levels, all of such mobile stations, using conventional cell selection techniques, so-positioned would select a single cell. Other cells, that exhibit characteristics permitting of communications but of lower RSSI levels, would be unused.

Accordingly, pursuant to operation of an embodiment of the present invention, an apparatus 36 is provided that facilitates distribution of loading of communications during operation of the communication system. The apparatus is formed of elements that are functionally represented, implementable in any desired manner, including algorithms executable by processing circuitry. In the exemplary implementation, the apparatus is embodied at the mobile station, and the apparatus, embodied at the mobile station, operates to assist the network in selection and reselection of cells to facilitate load distribution of communications communicated upon the radio air interface. Operation of the apparatus is autonomous. In other implementations, the apparatus is positioned elsewhere, or distributed amongst different entities.

The apparatus 36 is coupled to the transceiver circuitry, here represented by a receive part 38 and a transmit part 42, of the mobile station. The apparatus includes a signal indicia measurer 46 that measures signal indicia of signals broadcast by the base stations 18. In the exemplary implementation, the signal indicia comprise RSSI levels of the broadcast signals, when received at the mobile station. In other implementations, other signal indicia is alternately, or additionally, measured.

Once measured, indications of the measurements are provided to an available station set selector 48. The available station set selector operates to select communication stations, or their associated cells, that exhibit signal indicia levels at least as good as minimum threshold levels. When RSSI levels are measured, the station/cell set selector operates to determine which fixed-site transceivers broadcast signals that exhibit RSSI levels, when measured, greater than a minimum threshold magnitude. Communication stations, and their associated cells, that exhibit such characteristics form members of, or entries in, an available station set or, correspondingly, an available set of cells. Because each fixed-site station of the set exhibits characteristics that are at least as good as a threshold level, the mobile station is able to communicate, pursuant to a data communication service, with any of the fixed-site stations of the set.

The apparatus further includes an allocator 52 that allocates one of the stations of the available station set for communications. The allocation is made in a manner to facilitate distribution of loading of communications upon the radio air interface during communication operations. And, more particularly, the allocation of a selected one of the fixed-site transceivers is made randomly from amongst the available stations of the available station sets.

The apparatus is here further shown to include an allocation message generator 56. The allocation message generator 56 operates to generate a message that is provided to the transmit part 42 and caused to be sent by the mobile station to the network to inform the network of the requested allocation. The message is, for instance, provided to the base station controller and the base station controller makes assignment of the allocation in conformity with the allocation identified in the message. Upon allocation of the fixed-site transceiver, performance of the data communication service is performed. Because the allocation is made to any of the cells associated with fixed-site stations contained in the available station set, and in a random manner, loading is distributed amongst such cells. Thereby, more equal distribution of loading results. The operations performed by the apparatus is, a sorting, threshold detection, and randomization procedure. In the exemplary implementation, the process is expressed mathematically as follows: 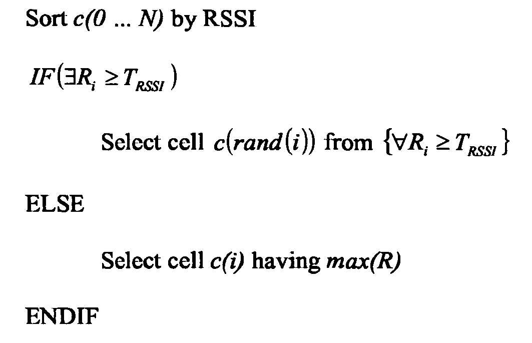 Where:
*c(0* ... *N)* = Adjacent cells in strongest cell list, to be sorted by RSSI;
*Rᵢ* = Received signal strength indication (RSSI) of cell *I;*
*rand*(*i*) = A random number representing a cell from the set of those having *Rᵢ* ≥ *T_{RSSI}*;
*AFN* = Absolute GSM frame number;
*M* = The number of the subset of cells having *Rᵢ* ≥ *T_{RSSI}*; and
*T_{RSSI}* = Minimum signal strength threshold of cell *i* received from the network.

Review of the mathematical expression indicates that, in the event that none of the RSSI measurements are at least as great as the minimum signal strength threshold, then the station associated with the cell having the greatest signal strength level is selected.

Random allocation is made in a desired manner, e.g., by a modulo operation performed on a number divided by the number of stations or cells in the active set. The number is, for instance, associated with a system frame number, a system time value, or a geographical location value, e.g., latitudinal or longitudinal coordinate, or other appropriate value. That is to say, in one manner of generating the random value, a network frame number modulo the number of cells in the set of cell is performed. In another implementation, an internally or externally available representation of system time modulo the number of cells is performed and, in another implementation, a numerical representation of the location of the mobile station modulo the number of cells is performed. In any of the calculations, as well as others, a goal is to distribute the loading randomly amongst the available cells or stations.

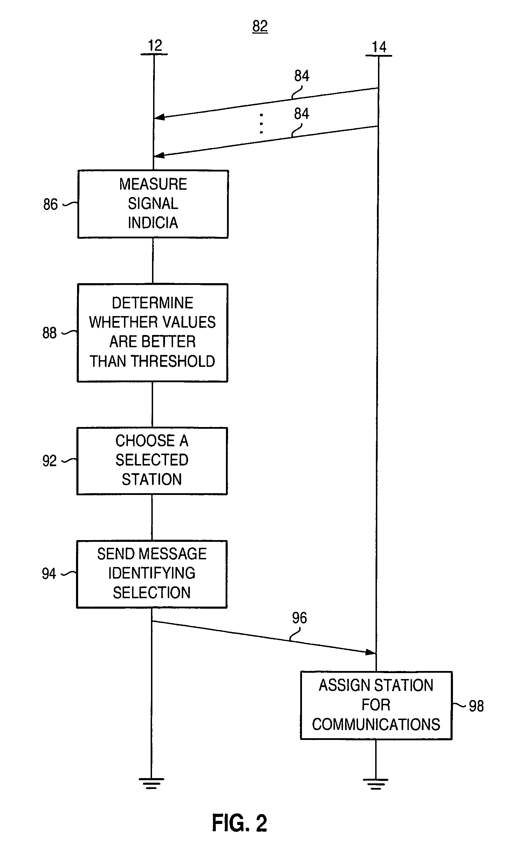

Figure 2 illustrates a message sequence diagram, shown generally at 82, representative of exemplary operation of the communication system 10, shown in Figure 1.

As indicated by the segments 84, the mobile station receives a plurality of signals broadcast by a plurality of base stations. And, as indicated by the block 86, measurements are made upon signal indicia, e.g., RSSI levels, of the receive signals.

Once measurements are made, determinations are made, indicated by the block 88, as to whether the measured values are better than a selected threshold, such as a minimum magnitude level. And, those fixed-site transceivers/cells exhibiting the desired characteristics are selected to form members of an available set and, as indicated by the block 92, choose from amongst the members of the set a selected fixed-site transceiver station/cell as the allocated station/cell to which to communicate data. Selection is made on a random basis, such as in manners described above. A message is generated, indicated by the block 94, and sent, indicated by the block 96, to the radio access network, and the message is acted upon, indicated by the block 98.

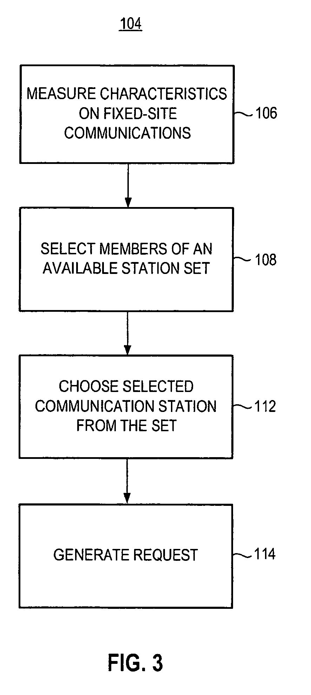

Figure 3 illustrates a method flow diagram, shown generally at 104, representative of the method of operation of an embodiment of the present invention. The method selects a selected communication station of a multi-station radio communication network through which to communicate.

First, and as indicated by the block 106, measurements are made of characteristics of the communication stations of the multi-station radio network. Then, and as indicated by the block 108, an available set of communication stations of the multi-station radio network that exhibit characteristics at least as good as a threshold is selected.

Then, and as indicated by the block 112, the selected communication station is chosen from amongst the communication stations of the available set. The selection is made in a manner to distribute radio network loading amongst the communication stations of the selected station set. And, as indicated by the block 114, a request is generated and sent requesting assignation of the selected communication station through which to communicate.

Thereby, a manner is provided by which better to distribute the loading of communications amongst available cells, available through which to communicate data pursuant to a data communication service.

The previous descriptions are of preferred examples for implementing the invention, and the scope of the invention should not necessarily be limited by this description. The scope of the present invention is defined by the following claims.

## Claims

1. An apparatus (36) for a mobile station (12) to select a communication station (18) of a multi-station radio communication network (14) through which to communicate, said apparatus (36) being **characterized by**:
an available station set selector (48) configured to sort communication stations (18) of the multi-station radio communication network (14) according to values of signal indicia of a signal received at the mobile station (12), and to select, as an available station set, those stations (18) that exhibit a value of the signal indicia that is greater than or equal to a threshold value; and,
an allocator (52) disposed at the mobile station (12) and adapted to receive an indication of the available station set, said allocator (52) configured to allocate a communication station (18) through which to communicate, the allocated communication station (18) being selected randomly from the available station set so as to distribute radio network loading amongst the stations (18) of the available station set, such that the selection of one station from amongst said available station set is as equally likely as the selection of any other station from amongst said available station set, the station being allocated without any prior prioritization of the stations of the available station set.

2. The apparatus of claim 1, wherein the signal indicia that is used by said available-station-set selector (48) comprises received signal strength indication, RSSI, level of signals broadcast by the communication stations (18) of the multi-station radio communication network (14).

3. The apparatus of claim 2, wherein said available-station-set selector (48) selects, as the available station set, communication stations (18) that broadcast respective RSSI signal levels which, when measured, are greater than the threshold value.

4. The apparatus of claim 1, further comprising a characteristic measurer (46) configured to measure signal indicia of the communication stations (18) of the multi-station radio network (14).

5. The apparatus of claim 4, wherein said available-station-set selector (48) is adapted to receive indications of measurements made by said characteristic measurer (46), and wherein selection by said available-station-set selector (48) is responsive to the indications of the measurements.

6. The apparatus of claim 1, wherein the available-station-set selector (48) is configured to sort communication stations (18) of the multi-station radio communication network (14) according to values of two or more signal indicia, and to select, as an available station set, those stations (18) that exhibit a respective value of each signal indicia that is greater than or equal to a respective threshold value

7. The apparatus of claim 1, wherein the allocation by said allocator (52) of the selected communication station (18) comprises randomly distributing the radio network loading amongst communication stations (18) of the selected station set, wherein random distributing includes: dividing a predetermined number by a number of fixed-site stations (18) that comprise the available station set, and performing a modulo operation on the integer remainder of the result of said division.

8. The apparatus of claim 7, wherein communications with the radio communication network (14) comprises a communication of data formatted in frames and in which the frames have frame numbers, and wherein a random number is generated using a frame number, a resultant random number being used by said allocator (52) to allocate a communication station (18).

9. The apparatus of claim 8, wherein the allocation of the selected communication station (18) is made responsive to a modulo determination of the frame number divided by the number of communication stations (18) that comprise the available station set.

10. The apparatus of claim 7, wherein communication with the radio communication network (14) is carried out at times defined by a system time, and wherein the predetermined number is determined by the system time.

11. The apparatus of claim 10, wherein the allocation of the selected communication station (18) is determined from the system time modulo of the number of communication stations (18) that comprise the available station set.

12. The apparatus of claim 7, wherein communications with the radio communication network (14) are carried out by a mobile station (12) positioned at a geographical location, and wherein random distribution of the radio network loading by which said allocator (52) allocates the selected communication station (18) uses indicia of the geographical location of the mobile station (12).

13. The apparatus of claim 12, wherein the allocation of the selected communication station (18) is determined using the indicia of the geographical location, modulo of the number of communication stations (18) comprising the available station set.

14. The apparatus of claim 1, wherein communications with the multi-station radio communication network (14) comprise packet-switched communications, and wherein allocations made by said allocator (52) are made to distribute packet-switched communications loading amongst the communication stations (18) of the selected station set.

15. The apparatus of claim 1, wherein communications with the radio communication network (14) are carried out by a mobile station (12), and wherein said available station set selector (48) and said allocator (52) are embodied at the

16. A method (82) in a mobile station (12) for selecting a communication station (18) of a multi-station radio communication network (14) through which to communicate, said method (82) being **characterized by** the steps of:
sorting communication stations (18) of the multi-station radio communication network (14) according to values of signal indicia of a signal received at the mobile station (12);
selecting (108), as an available station set, those stations (18) that exhibit a value of the signal indicia that is greater than or equal to a threshold value; and,
allocating a communication station (18) at the mobile station (12) through which to communicate, the allocated communication station (18) being selected randomly from the available station set so as to distribute radio network loading amongst the stations (18) of the available station set, such that the selection of one station from amongst said available station set is as equally likely as the selection of any other station from amongst said available station set, the station being allocated without any prior prioritization of the stations of the available station set.

17. The method of claim 16, wherein the sorting step involves sorting communication stations (18) of the multi-station radio communication network (14) according to values of two or more signal indicia, and wherein the selecting step involves selecting, as an available station set, those stations (18) that exhibit a respective value of each signal indicia that is greater than or equal to a respective threshold value.

18. The method of claim 16, wherein the allocating step comprises randomly distributing the radio network loading amongst communication stations (18) of the selected station set, wherein random distributing includes dividing a predetermined number by a number of fixed-site stations (18) that comprise the available station set, and performing a modulo operation on the integer remainder of the result of said division.

## Patentansprüche

1. Vorrichtung (36) für eine Mobilstation (12), um eine Kommunikationsstation (18) eines Mehrstationen-Funkkommunikationsnetzes (14) auszuwählen, durch die kommuniziert werden soll, wobei die Vorrichtung (36) durch Folgendes gekennzeichnet ist:
eine Auswähleinheit (48) für eine Menge an verfügbaren Stationen, wobei die Auswähleinheit dazu konfiguriert ist, Kommunikationsstationen (18) eines Mehrstationen-Funkkommunikationsnetzes (14) nach Signalzeichenwerten eines an der Mobilstation (12) empfangenen Signals zu ordnen und jene Stationen (18), die einen Signalzeichenwert vorweisen, der größer als oder gleich hoch wie ein Schwellenwert ist, als eine Menge an verfügbaren Stationen auszuwählen, und
einen Zuteiler (52), der an der Mobilstation (12) angeordnet ist und dazu ausgelegt ist, eine Angabe einer Menge an verfügbaren Stationen zu empfangen, wobei der Zuteiler (52) dazu konfiguriert ist, eine Kommunikationsstation (18) zuzuteilen, durch die kommuniziert werden soll, wobei die zugeteilte Kommunikationsstation (18) aus der Menge an verfügbaren Stationen zufällig ausgewählt wird, um so eine Funknetzlast unter den Stationen (18) der Menge an verfügbaren Stationen zu verteilen, so dass die Auswahl einer Station aus der Menge an verfügbaren Stationen gleich wahrscheinlich wie die Auswahl einer beliebigen anderen Station aus der Menge an verfügbaren Stationen ist, wobei die Station ohne jegliche vorherige Priorisierung der Stationen der Menge an verfügbaren Stationen zugeteilt wird.

2. Vorrichtung nach Anspruch 1, wobei das Signalzeichen, das von der Auswähleinheit (48) für die Menge an verfügbaren Stationen benutzt ist, einen RSSI-Pegel, 'Received Signal Strength Indication', von Signalen aufweist, die von den Kommunikationsstationen (18) des Mehrstationen-Funkkommunikationsnetzes (14) ausgestrahlt sind.

3. Vorrichtung nach Anspruch 2, wobei die Auswähleinheit (48) für die Menge an verfügbaren Stationen Kommunikationsstationen (18), die entsprechende RSSI-Signal-Pegel ausstrahlen, die, wenn sie gemessen werden, größer als der Schwellenwert sind, als die Menge an verfügbaren Stationen auswählt.

4. Vorrichtung nach Anspruch 1 ferner mit einer charakteristischen Messeinheit (46), die dazu konfiguriert ist, Signalzeichen der Kommunikationsstationen (18) des Mehrstationen-Funkkommunikationsnetzes (14) zu messen.

5. Vorrichtung nach Anspruch 4, wobei die Auswähleinheit (48) für die Menge an verfügbaren Stationen dazu ausgelegt ist, Angaben von Messungen zu empfangen, die von der charakteristischen Messeinheit (46) gemacht sind, und wobei ein Auswählen durch die Auswähleinheit (48) für die Menge an verfügbaren Stationen auf die Angaben der Messungen reagiert.

6. Vorrichtung nach Anspruch 1, wobei die Auswähleinheit (48) für die Menge an verfügbaren Stationen dazu konfiguriert ist, Kommunikationsstationen (18) des Mehrstationen-Funkkommunikationsnetzes (14) nach den Werten von zwei oder mehr Signalzeichen zu ordnen und jene Stationen (18), die einen entsprechenden Wert jedes Signalzeichens aufweisen, der größer als oder gleich groß wie ein entsprechender Schwellenwert ist, als eine Menge an verfügbaren Stationen auszuwählen.

7. Vorrichtung nach Anspruch 1, wobei die Zuteilung durch den Zuteiler (52) der ausgewählten Kommunikationsstation (18) ein zufälliges Verteilen der Funknetzlast unter Kommunikationsstationen (18) der Menge an ausgewählten Stationen aufweist, wobei zufälliges Verteilen Folgendes einschließt: Dividieren einer vorbestimmten Zahl durch eine Zahl an Feststandortstationen (18), welche die Menge an verfügbaren Stationen aufweisen, und Durchführen einer Modulooperation auf den Ganzzahlrest des Ergebnisses der Division.

8. Vorrichtung nach Anspruch 7, wobei die Kommunikationen mit dem Funkkommunikationsnetz (14) eine Kommunikation von Daten aufweisen, die in Rahmen formatiert sind und in denen die Rahmen Rahmennummern haben, und wobei eine Zufallszahl unter Verwendung einer Rahmennummer erzeugt ist, wobei eine Ergebniszufallszahl von dem Zuteiler (52) verwendet wird, um eine Kommunikationsstation (18) zuzuteilen.

9. Vorrichtung nach Anspruch 8, wobei die Zuteilung der ausgewählten Kommunikationsstation (18) als Reaktion auf eine Modulobestimmung der Rahmennummer dividiert durch die Zahl an Kommunikationsstationen (18) erfolgt, welche die Menge an verfügbaren Stationen aufweisen.

10. Vorrichtung nach Anspruch 7, wobei die Kommunikation mit dem Funkkommunikationsnetz (14) zu Zeiten ausgeführt wird, die von einer Systemzeit bestimmt sind, und wobei die vorbestimmte Zahl durch die Systemzeit bestimmt wird.

11. Vorrichtung nach Anspruch 10, wobei das Zuteilen der ausgewählten Kommunikationsstation (18) aus der Systemzeit modulo der Zahl an Kommunikationsstationen (18) bestimmt ist, welche die Menge an verfügbaren Stationen aufweisen.

12. Vorrichtung nach Anspruch 7, wobei die Kommunikationen mit dem Funkkommunikationsnetz (14) von einer Mobilstation (12) ausgeführt werden, die an einer geografischen Stelle positioniert ist, und wobei zufälliges Verteilen der Funknetzlast, durch das der Zuteiler (52) die ausgewählte Kommunikationsstation (18) zuteilt, Zeichen der geografischen Stelle der Mobilstation (12) verwendet.

13. Vorrichtung nach Anspruch 12, wobei die Zuteilung der ausgewählten Kommunikationsstation (18) unter Verwendung des Zeichens der geografischen Stelle modulo der Zahl an Kommunikationsstationen (18) bestimmt ist, welche die Menge an verfügbaren Stationen aufweisen.

14. Vorrichtung nach Anspruch 1, wobei Kommunikationen mit Mehrstationen-Funkkommunikationsnetz (14) paketvermittelte Kommunikationen aufweisen, und wobei von dem Zuteiler (52) gemachte Zuteilungen gemacht werden, um eine Last paketvermittelter Kommunikationen unter den Kommunikationsstationen (18) der Menge an ausgewählten Stationen zu verteilen.

15. Vorrichtung nach Anspruch 1, wobei Kommunikationen mit dem Funkkommunikationsnetz (14) von einer Mobilstation (12) ausgeführt werden und die Auswähleinheit (48) für die Menge an verfügbaren Stationen und der Zuornder (52) an der Mobilstation (12) verkörpert sind.

16. Verfahren (82) an einer Mobilstation (12) zum Auswählen einer Kommunikationsstation (18) eines Mehrstationen-Funkkommunikationsnetzes (14), durch die kommuniziert werden soll, wobei das Verfahren (82) durch die Folgenden Schritte gekennzeichnet ist:
Ordnen von Kommunikationsstationen (18) des Mehrstationen-Funkkommunikationsnetzes (14) nach Signalszeichenwerten eines Signals, das an der Mobilstation (12) empfangen ist;
Auswählen (108) jener Stationen (18), die einen Signalzeichenwert vorweisen, der größer als oder gleich groß wie ein Schwellenwert ist, als eine Menge an verfügbaren Stationen und,
Zuteilen einer Kommunikationsstation (18) an der Mobilstation (12), durch die kommuniziert werden soll, wobei die zugeteilte Kommunikationsstation (18) aus der Menge an verfügbaren Stationen zufällig ausgewählt ist, um so eine Funknetzlast unter den Stationen (18) der Menge an verfügbaren Stationen zu verteilen, so dass die Auswahl einer Station aus der Menge an verfügbaren Stationen gleich wahrscheinlich wie die Auswahl einer beliebigen anderen Station aus der Menge an verfügbaren Stationen ist, wobei die Station ohne jegliche vorherige Priorisierung der Stationen der Menge an verfügbaren Stationen zugeteilt ist.

17. Verfahren nach Anspruch 16, wobei der Ordnungsschritt ein Ordnen von Kommunikationsstationen (18) des Mehrstationen-Funkkommunikationsnetzes (14) nach Werten von zwei oder mehr Signalzeichen involviert und wobei der Auswahlschritt ein Auswählen jener Stationen (18), die einen entsprechenden Wert jedes Signalzeichens vorweisen, der größer als oder gleich groß wie ein entsprechender Schwellenwert ist, als eine Menge an verfügbaren Stationen involviert.

18. Verfahren nach Anspruch 16, wobei der Zuteilungsschritt ein zufälliges Verteilen der Funknetzlast unter Kommunikationsstationen (18) der Menge an ausgewählten Stationen aufweist, wobei zufälliges Verteilen ein Dividieren einer vorbestimmten Zahl durch eine Zahl an Feststandort-Stationen (18) aufweist, welche die Menge an verfügbaren Stationen aufweisen, und Durchführen einer Modulooperation auf dem Ganzzahlrest des Ergebnisses der Division.

## Revendications

1. Appareil (36) pour une station mobile (12), destiné à sélectionner une station de communication (18) d'un réseau de communication radio à stations multiples (14) grâce auquel communiquer, ledit appareil (36) étant **caractérisé par** :
un sélecteur d'ensemble de stations disponibles (48), configuré pour trier des stations de communication (18) du réseau de communication radio à stations multiples (14) en fonction des valeurs d'indices du signal reçu par la station mobile (12) et pour sélectionner, comme ensemble de stations disponibles, les stations (18) qui présentent une valeur des indices du signal qui est égale ou supérieure à une valeur de seuil ; et
un moyen d'attribution (52) implanté sur la station mobile (12) et conçu pour recevoir une indication de l'ensemble de stations disponibles, ledit moyen d'attribution (52) étant configuré pour attribuer une station de communication (18) avec laquelle communiquer, la station de communication (18) étant sélectionnée aléatoirement dans l'ensemble de stations disponibles de manière à distribuer la charge du réseau radio entre les stations (18) de l'ensemble de stations disponibles, si bien que la sélection d'une station parmi les stations (18) de l'ensemble de stations disponibles est tout aussi probable que la sélection de toute autre station parmi ledit ensemble de stations disponibles, la station étant attribuée sans aucun classement préalable par priorité entre les stations de l'ensemble de stations disponibles.

2. Appareil selon la revendication 1, dans lequel les indices du signal qui sont utilisés par ledit sélecteur d'ensemble de stations disponibles (48) comprennent des niveaux d'indication d'intensité du signal reçu (RSSI) pour les signaux diffusés par les stations de communication (18) du réseau de communication radio à stations multiples (14).

3. Appareil selon la revendication 2, dans lequel ledit sélecteur d'ensemble de stations disponibles (48) sélectionne, comme ensemble de stations disponibles, des stations de communication (18) qui diffusent des niveaux de signal RSSI respectifs qui, lorsqu'ils sont mesurés, sont supérieurs à la valeur de seuil.

4. Appareil selon la revendication 1, comprenant en outre un moyen de mesure de caractéristiques (46) configuré pour mesurer des indices du signal pour les stations de communication (18) du réseau radio à stations multiples (14).

5. Appareil selon la revendication 4, dans lequel ledit sélecteur d'ensemble de stations disponibles (48) est conçu pour recevoir des indications de mesures effectuées par ledit moyen de mesure de caractéristiques (46) et dans lequel la sélection par ledit sélecteur d'ensemble de stations disponibles (48) se fait en réponse aux indications des mesures.

6. Appareil selon la revendication 1, dans lequel le sélecteur d'ensemble de stations disponibles (48) est configuré pour trier les stations de communication (18) en fonction des valeurs de deux indices du signal ou plus et pour sélectionner, comme ensemble de stations disponibles, les stations (18) qui présentent une valeur respective de chaque indice du signal qui est égale ou supérieure à une valeur de seuil respective.

7. Appareil selon la revendication 1, dans lequel l'attribution de la station de communication (18) sélectionnée par ledit moyen d'attribution (52) comprend une distribution aléatoire de la charge du réseau radio entre les stations de communication (18) de l'ensemble de stations disponibles, dans lequel la distribution aléatoire comprend la division d'un nombre prédéterminé par un nombre des stations en site fixe (18) qui composent l'ensemble de stations disponibles et effectuent une opération modulo sur le reste entier de cette division.

8. Appareil selon la revendication 7, dans lequel les communications avec le réseau de communication radio (14) comprennent une communication de données formatées en trames et les trames portent des numéros de trame et dans lequel un numéro aléatoire est produit en utilisant un numéro de trame, le nombre aléatoire obtenu étant utilisé par ledit moyen d'attribution (52) pour attribuer une station de communication (18).

9. Appareil selon la revendication 8, dans lequel l'attribution de la station de communication (18) sélectionnée s'effectue en fonction du modulo de la division du numéro de trame par le nombre de stations de communication (18) qui composent l'ensemble de stations disponibles.

10. Appareil selon la revendication 7, dans lequel la communication avec le réseau de communication radio à stations multiples (14) s'effectue à des instants définis par une heure du système et dans lequel le nombre prédéterminé est déterminé par l'heure du système.

11. Appareil selon la revendication 10, dans lequel l'attribution de la station de communication (18) sélectionnée est déterminée à partir de l'heure du système modulo le nombre de stations de communication (18) composant l'ensemble de stations disponibles.

12. Appareil selon la revendication 7, dans lequel les communications avec le réseau de communication radio à stations multiples (14) sont effectuées par une station mobile (12) implantée dans une position géographique et dans lequel la distribution aléatoire de la charge du réseau radio d'après laquelle ledit moyen d'attribution (52) attribue la station de communication (18) sélectionnée utilise des indices de la position géographique de la station mobile (12).

13. Appareil selon la revendication 12, dans lequel l'attribution de la station de communication (18) sélectionnée est déterminée à l'aide des indices de la position géographique, modulo le nombre de stations de communication (18) composant l'ensemble de stations disponibles.

14. Appareil selon la revendication 1, dans lequel la communication avec le réseau de communication radio à stations multiples (14) comprend des communications avec commutation de paquets et dans lequel les attributions effectuées par ledit moyen d'attribution (52) sont réalisées afin de distribuer la charge des communications avec commutation de paquets entre les stations de communication (18) de l'ensemble de stations disponibles.

15. Appareil selon la revendication 1, dans lequel les communications avec le réseau de communication radio (14) sont effectuées par une station mobile (12) et dans lequel ledit sélecteur d'ensemble de stations disponibles (48) et ledit moyen d'attribution (52) sont mis en oeuvre sur la station mobile (12).

16. Procédé (82) exécuté sur une station mobile (12) pour sélectionner une station de communication (18) d'un réseau de communication radio à stations multiples (14) grâce auquel communiquer, ledit procédé (82) étant **caractérisé par** les étapes consistant à :
trier des stations de communication (18) du réseau de communication radio à stations multiples (14) en fonction des valeurs d'indices du signal reçu par la station mobile (12) ;
sélectionner (108), comme ensemble de stations disponibles, les stations (18) qui présentent une valeur des indices du signal qui est égale ou supérieure à une valeur de seuil ; et
sur la station mobile (12), attribuer une station de communication (18) avec laquelle communiquer, la station de communication (18) étant sélectionnée aléatoirement dans l'ensemble de stations disponibles de manière à distribuer la charge du réseau radio entre les stations (18) de l'ensemble de stations disponibles, si bien que la sélection d'une station parmi l'ensemble de stations disponibles est tout aussi probable que la sélection de toute autre station parmi ledit ensemble de stations disponibles, la station étant attribuée sans aucun classement préalable par priorité des stations de l'ensemble de stations disponibles.

17. Procédé selon la revendication 16, dans lequel l'étape de tri comprend l'étape consistant à trier les stations de communication (18) du réseau de communication radio à stations multiples (14) en fonction des valeurs de deux indices du signal ou plus et dans lequel l'étape de sélection comprend l'étape consistant à sélectionner, comme ensemble de stations disponibles, les stations (18) qui présentent une valeur respective de chaque indice du signal qui est égale ou supérieure à une valeur de seuil respective.

18. Procédé selon la revendication 16, dans lequel l'étape d'attribution comprend l'étape consistant à distribuer aléatoirement la charge du réseau radio entre les stations de communication (18) de l'ensemble de stations disponibles, dans lequel l'étape de distribution aléatoire comprend l'étape consistant à diviser un nombre prédéterminé par un nombre des stations en site fixe (18) qui composent l'ensemble de stations disponibles et à effectuer une opération modulo sur le reste entier de cette division.
